(19)

Europäisches
Patentamt
European
Patent Office
Office européen
des brevets

(11) **EP 3 985 983 A1**

(12) **EUROPEAN PATENT APPLICATION**
published in accordance with Art. 153(4) EPC

(43) Date of publication:
**20.04.2022 Bulletin 2022/16**

(21) Application number: **20887497.4**

(22) Date of filing: **22.10.2020**

(51) International Patent Classification (IPC):
**H04N 19/82** $^{(2014.01)}$  **H04N 19/593** $^{(2014.01)}$

(52) Cooperative Patent Classification (CPC):
**H04N 19/117; H04N 19/14; H04N 19/182;**
**H04N 19/593**

(86) International application number:
**PCT/CN2020/122791**

(87) International publication number:
**WO 2021/093538 (20.05.2021 Gazette 2021/20)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **15.11.2019 CN 201911122284**

(71) Applicant: **TENCENT TECHNOLOGY (SHENZHEN)**
**COMPANY LIMITED**
**Shenzhen, Guangdong 518057 (CN)**

(72) Inventors:
• **WANG, Yingbin**
  **Shenzhen, Guangdong 518057 (CN)**
• **LI, Yiming**
  **Shenzhen, Guangdong 518057 (CN)**
• **XU, Xiaozhong**
  **Shenzhen, Guangdong 518057 (CN)**
• **LIU, Shan**
  **Shenzhen, Guangdong 518057 (CN)**
• **CHEN, Zhenzhong**
  **Shenzhen, Guangdong 518057 (CN)**

(74) Representative: **Eisenführ Speiser**
**Patentanwälte Rechtsanwälte PartGmbB**
**Postfach 31 02 60**
**80102 München (DE)**

(54) **INTERPOLATION FILTERING METHOD AND APPARATUS FOR INTRA-FRAME PREDICTION, MEDIUM, AND ELECTRONIC DEVICE**

(57)    Embodiments of the present application provide an interpolation filtering method and apparatus for intra-frame prediction, a medium, and an electronic device. The interpolation filtering method for intra-frame prediction comprises: obtaining information of a prediction pixel comprised in a specified prediction unit, and obtaining filtering parameters corresponding to the specified prediction unit; according to a distance between the prediction pixel and a first reference pixel of the prediction pixel, selecting, from the filtering parameters corresponding to the specified prediction unit, a target filter matched with the distance; and performing interpolation filtering processing on a second reference pixel of the prediction pixel by means of the target filter to obtain a prediction value of the prediction pixel.

Obtain information of a prediction pixel in a specified prediction unit, and obtain filter parameters corresponding to the specified prediction unit — S310

Select, based on a distance between the prediction pixel and a first reference pixel of the prediction pixel, a target filter matching the distance from the filter parameters corresponding to the specified prediction unit — S320

Perform interpolation filtering on a second reference pixel of the prediction pixel by using the target filter, to obtain a predicted value of the prediction pixel — S330

FIG. 3

## Description

This application claims priority to Chinese Patent Application No. 201911122284.0, entitled "INTERPOLATION FILTERING METHOD AND APPARATUS FOR INTRA-FRAME PREDICTION, MEDIUM, AND ELECTRONIC DEVICE", and filed with the China National Intellectual Property Administration on November 15, 2019, which is incorporated herein by reference in its entirety.

## FIELD

This application relates to the field of computer and communication technologies, and in particular, to an interpolation filtering method and apparatus for intra-frame prediction, a medium, and an electronic device.

## BACKGROUND

Intra-frame prediction interpolation filtering is implemented by performing interpolation based spatial correlation of pixels to obtain a pixel value of a sub-pixel location of a reference pixel, so as to obtain an accurate predicted value. In addition to a function of linear interpolation, an intra-frame prediction sub-pixel interpolation filter also has a function of smoothing. With the smoothing, the impact of noise on intra-frame prediction can be alleviated, thereby facilitating concentration of energy after transformation and improving encoding efficiency.

However, the function of smoothing of the intra-frame prediction interpolation filter may result in loss of high-frequency texture detail information. In addition, an excessively smooth interpolation filter may result in an excessively small difference between predicted values derived from adjacent prediction angles, affecting the gain of encoding performance. However, a sub-pixel filter in an audio video coding standard 3 (AVS 3) performs interpolation filtering on pixels in different locations in a prediction unit by using the same group of filter coefficients, which may result in an inaccurate predicted value, affecting the encoding performance and the decoding efficiency.

## SUMMARY

An interpolation filtering method and apparatus for intra-frame prediction, a medium, and an electronic device are provided according to embodiments of this application, so that different interpolation filter parameters can be further adaptively selected based on location information of prediction pixels to some extent, thereby improving the accuracy of pixel interpolation prediction during intra-frame prediction, thus improving the encoding compression performance and the decoding efficiency.

Other features and advantages of this application become apparent through the following detailed descriptions, or may be partially learned partially through the practice of this application.

According to an aspect of the embodiments of this application, an interpolation filtering method for intra-frame prediction is provided, including: obtaining information of a prediction pixel in a specified prediction unit, and obtaining filter parameters corresponding to the specified prediction unit; selecting, based on a distance between the prediction pixel and a first reference pixel of the prediction pixel, a target filter matching the distance from the filter parameters corresponding to the specified prediction unit; and performing interpolation filtering on a second reference pixel by using the target filter, to obtain a predicted value of the prediction pixel.

According to an aspect of the embodiments of this application, an interpolation filtering apparatus for intra-frame prediction is provided, including: an obtaining unit, a first processing unit, and a second processing unit. The obtaining unit is configured to obtain information of a prediction pixel in a specified prediction unit, and obtain filter parameters corresponding to the specified prediction unit. The first processing unit is configured to select, based on a distance between the prediction pixel and a first reference pixel of the prediction pixel, a target filter matching the distance from the filter parameters corresponding to the specified prediction unit. The second processing unit is configured to perform interpolation filtering on a second reference pixel of the prediction pixel by using the target filter, to obtain a predicted value of the prediction pixel.

According to an aspect of the embodiments of this application, a computer-readable medium is provided, which stores a computer program. The computer program, when being executed by a processor, implements the interpolation filtering method for intra-frame prediction according to the embodiments.

According to an aspect of the embodiments of this application, an electronic device is provided, which includes: one or more processors; and a storage apparatus. The storage apparatus is configured to store one or more programs. The one or more programs, when being executed by the one or more processors, causes the electronic device to implement the interpolation filtering method for intra-frame prediction according to the embodiments.

In the technical solutions according to embodiments of this application, a target filter matching the distance is selected from filter parameters corresponding to a specified prediction unit based on a distance between a prediction pixel and a first reference pixel, interpolation filtering is performed on a second reference pixel by using the target filter, to obtain a predicted value of the prediction pixel, so that interpolation filters can be adaptively selected based on location information of prediction pixels (that is, the distances between the prediction pixels and the first reference pixel), thereby improving the accuracy of pixel interpolation prediction during intra-frame prediction, thus improving the encoding compression performance and the decoding efficiency.

It is to be understood that, the foregoing general descriptions and the following detailed descriptions are merely for illustration and explanation purposes and are not intended to limit this application.

## BRIEF DESCRIPTION OF THE DRAWINGS

Drawings herein are incorporated into this specification and constitute a part of this specification, and show embodiments according to this application, and are used for describing a principle of this application together with this specification. Apparently, the drawings in the following descriptions merely show some embodiments of this application, and a person of ordinary skill in the art may further obtain other drawings according to the drawings without creative efforts.

FIG. 1 is a schematic diagram of an exemplary system architecture to which a technical solution according to an embodiment of this application is applied.

FIG. 2 is a schematic diagram of arrangement manners of a video encoding apparatus and a video decoding apparatus in a streaming transmission environment.

FIG. 3 is a flowchart of an interpolation filtering method for intra-frame prediction according to an embodiment of this application.

FIG. 4 is a process flowchart of step S320 shown in FIG. 3 according to an embodiment of this application.

FIG. 5 is a schematic diagram of distribution of intra-frame prediction modes according to an embodiment of this application.

FIG. 6 is a block diagram of an interpolation filtering apparatus for intra-frame prediction according to an embodiment of this application.

FIG. 7 is a schematic structural diagram of a computer system for implementing an electronic device according to an embodiment of this application.

## DESCRIPTION OF EMBODIMENTS

At present, the exemplary embodiments are described comprehensively with reference to the drawings. However, the exemplary embodiments may be implemented many forms, which is not limited to the examples described herein. Further, the exemplary embodiments are provided to make this application more comprehensive and complete, and comprehensively convey the idea of the exemplary embodiments to a person skilled in the art.

In addition, the described characteristics, structures, or features may be combined in one or more embodiments in any appropriate manner. In the following descriptions, a lot of specific details are provided to give a comprehensive understanding of the embodiments of this application. However, it is to be appreciated by a person skilled in the art that the technical solutions in this application may be implemented without one or more of the following particular details, or may be implemented by using another method, unit, apparatus, or step. In other cases, well-known of methods, apparatuses, implementations, or operations are not shown or described in detail, to avoid obscuring the aspects of this application.

The block diagrams shown in the drawing are merely functional entities and do not necessarily correspond to physically independent entities. That is, the functional entities may be implemented in a software form, or in one or more hardware modules or integrated circuits, or in different networks and/or processor apparatuses and/or microcontroller apparatuses.

The flowcharts shown in the drawings are merely exemplary descriptions and do not necessarily include all of the content and operations/steps, nor are the flowcharts necessarily performed in the order described. For example, some operations/steps may be further divided, while some operations/steps may be combined or partially combined. Therefore, an actual execution order may change according to an actual case.

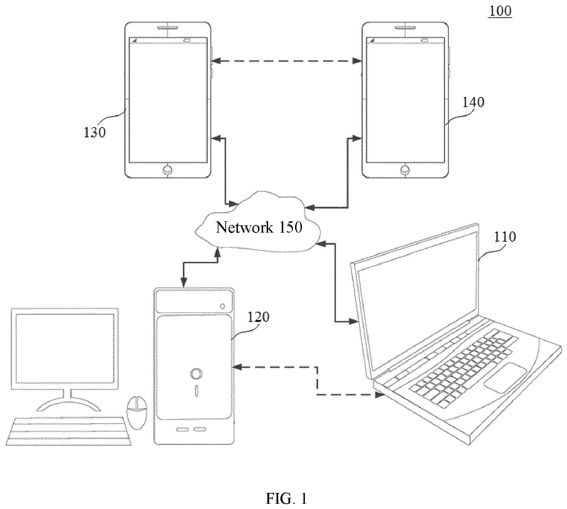

FIG. 1 is a schematic diagram of an exemplary system architecture to which a technical solution according to an embodiment of this application is applied.

As shown in FIG. 1, a system architecture 100 includes multiple terminal devices, and the terminal devices may communicate with each other by using, for example, a network 150. For example, the system architecture 100 may include a first terminal device 110 and a second terminal device 120 that are interconnected with each other by the network 150. In an embodiment of FIG. 1, the first terminal device 110 and the second terminal device 120 perform unidirectional data transmission. For example, the first terminal device 110 may encode video data (for example, a video picture stream acquired by the first terminal device 110) and transmit the encoded video data to the second terminal device 120 by using the network 150. The encoded video data is transmitted in the form of one or more encoded video bitstreams. The second terminal device 120 may receive the encoded video data from the network 150, decode the encoded video data to recover the video data, and display a video picture based on the recovered video data.

In an embodiment of this application, the system architecture 100 may include a third terminal device 130 and a fourth terminal device 140 that perform bidirectional transmission of encoded video data, and the bidirectional transmission may be performed, for example, during a video conference. For bidirectional data transmission, each of the third terminal device 130 and the fourth terminal device 140 may encode video data (for example, video picture streams acquired by the terminal devices), and transmit the encoded video data to the other of the third terminal device 130 and the fourth terminal device 140 by using the network 150. Each of the third terminal device 130 and the fourth terminal device 140 may further receive the encoded video data transmitted by the other of the third terminal device 130 and the fourth terminal device 140, decode the encoded video data to recover the video data, and display a video picture on an accessible display apparatus based on the recovered video data.

In the embodiment of FIG. 1, the first terminal device 110, the second terminal device 120, the third terminal device 130, and the fourth terminal device 140 may be servers, personal computers, and smartphones. However, the principles disclosed in this application may not be limited thereto. The embodiments in this application are applicable to a laptop computer, a tablet computer, a media player, and/or a dedicated video conference device. The network 150 represents any number of networks for transmitting the encoded video data among the first terminal device 110, the second terminal device 120, the third terminal device 130, and the fourth terminal device 140, including, for example, a wired and/or wireless communication network. The communication network 150 may exchange data in a circuit switched and/or packet switched channel. The network may include a telecommunication network, a local area network, a wide area network, and/or Internet. For purposes of this application, the architecture and topology of the network 150 may be inconsequential to the operations in this application, except as explained below.

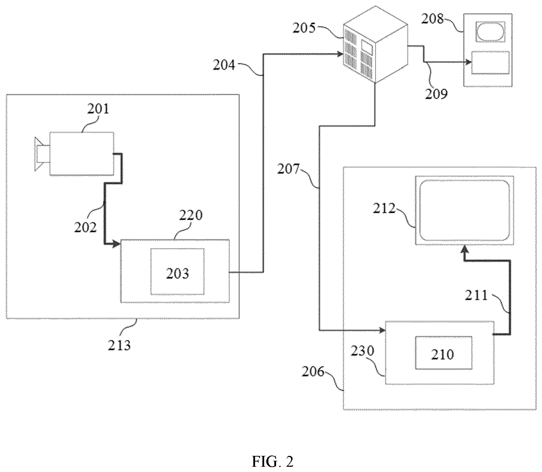

In an embodiment of this application, FIG. 2 is an arrangement manner of a video encoding apparatus and a video decoding apparatus in a streaming transmission environment. A subject disclosed in this application is equally applicable to another application that supports a video, including, for example, a video conference, a digital TV, storage of a compressed video on digital media including such as a CD, a DVD, and a memory stick.

A streaming transmission system may include an acquisition subsystem 213. The acquisition subsystem 213 may include a video source 201 such as a digital camera. The video source 201 creates an uncompressed video picture stream 202. In this embodiment, the video picture stream 202 includes a sample shot by the digital camera. Compared with encoded video data 204 (or an encoded video bitstream 204), the video picture stream 202 is described as a thick line to emphasize a high data volume video picture stream, the video picture stream 202 may be processed by an electronic device 220. The electronic device 220 includes a video encoding apparatus 203 coupled to the video source 201. The video encoding apparatus 203 may include a hardware, software, or a combination of software and hardware to implement the aspects of the disclosed subject described in more detail below. Compared with the video picture stream 202, the encoded video data 204 (or the encoded video bitstream 204) is described as a thin line to emphasize a low data volume of encoded video data 204 (or encoded video bitstream 204), which may be stored on a streaming transmission server 205 for future use. One or more streaming transmission client subsystems, for example, a client subsystem 206 and a client subsystem 208 shown in FIG. 2 may access the streaming transmission server 205 to retrieve a duplication 207 and a duplication 209 of the encoded video data 204. The client subsystem 206 may include, for example, a video decoding apparatus 210 in an electronic device 230. The video decoding apparatus 210 decodes the transmitted duplication 207 of the encoded video data, and generates an output video picture stream 211 that may be displayed on a display 212 (for example, a display screen) or another display apparatus. In some streaming transmission systems, the encoded video data 204, the video data 207, and the video data 209 (for example, a video bitstream) may be encoded according to some video encoding/compression standards. An embodiment of the standards includes ITU-T H.265. In an embodiment, a video encoding standard that is being developed is informally referred to as a next-generation video encoding standard (that is, versatile video coding (VVC)). This application may be applied to the context of the VVC standard.

The electronic device 220 and the electronic device 230 may include another component not shown in Figure 2. For example, the electronic device 220 may include a video decoding apparatus, and the electronic device 230 may further include a video encoding apparatus.

The implementation of the technical solutions in the embodiments of this application are described below in detail.

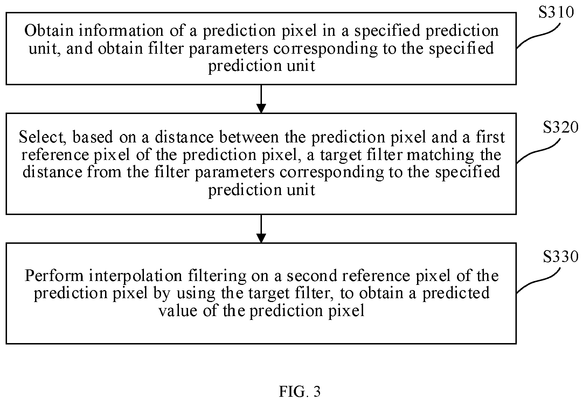

FIG. 3 is a flowchart of an interpolation filtering method for intra-frame prediction according to an embodiment of this application. The interpolation filtering method for intra-frame prediction may be performed by the video encoding apparatus and/or the video decoding apparatus according to the foregoing embodiments. Referring to FIG. 3, the interpolation filtering method for intra-frame prediction includes at least step S310 to step S330. A detailed description is as follows.

In step S310, information of a prediction pixel in a specified prediction unit is obtained, and filter parameters corresponding to the specified prediction unit are obtained.

In an embodiment of this application, the specified prediction unit may be any prediction unit in a video frame. The prediction unit may be a prediction block, an encoding unit, or a two-dimensional pixel block. The filter parameter may include a filter, a distance threshold (the distance threshold is used for classifying prediction pixels in the specified prediction unit), and the like. A parameter of the filter may include one or more of: a smoothing strength, the number of taps, a sub-pixel location precision, and a filtering coefficient precision. Filters are different from each other in at least one of the parameters.

In an embodiment of this application, prediction units in the video frame may be classified into at least one category based on information of the prediction units in the video frame, each category of prediction units corresponds to a group of filter parameters. In this way, the filter parameters corresponding to each category of prediction units may be set based on the information (for example, a size and a prediction mode) of the prediction units, thereby improving the accuracy of intra-frame prediction, thus improving the encoding compression performance and the decoding efficiency. In this case, a category to which the specified prediction unit belongs may be first determined, and filter parameters corresponding to the category to which the specified prediction unit belongs is used the filter parameters corresponding to the specified prediction unit; or a part of filter parameters corresponding to the category to which the specified prediction unit belongs is determined as the filter parameters corresponding to the specified prediction unit.

In an embodiment of this application, the prediction units in the video frame, the prediction units in the video frame may be classified into the at least one category based on a size of each of the prediction units in the video frame. For example, at least one size range may be set, and the prediction units in the video frame are classified into a category corresponding to the at least one set size range based on the size of each of the prediction units in the video frame. The size of each of the prediction units may be represented by a product of a width and a height of the prediction unit, or a sum of a width and a height of the prediction unit, or a width of the prediction unit or a height of the prediction unit, or the like.

In an embodiment of this application, the prediction units in the video frame may be classified into the at least one category based on an intra-frame prediction mode used by each of the prediction units in the video frame. For example, a prediction unit that adopts a vertically downward intra-frame prediction mode may be classified into one category, and a prediction unit that adopts a horizontal-left intra-frame prediction mode is classified into another category.

In an embodiment of this application, the prediction units in the video frame may be classified into the at least one category based on a feature of a reference pixel adjacent to each of the prediction units in the video frame. For example, a statistical feature of multiple reference pixels may be calculated based on the multiple reference pixels respectively adjacent to the prediction units, and the prediction units in the video frame are classified into the at least one category based on the statistical feature of the multiple reference pixels.

In an embodiment of this application, the multiple reference pixels may include reference pixels respectively located on the top of the prediction units in a pixel coordinate system, or reference pixels respectively located on the left of the prediction units in a pixel coordinate system, or reference pixels respectively located on the top and the left of the prediction units in a pixel coordinate system.

In an embodiment of this application, the statistical feature of the multiple reference pixels includes any one of the following: a variance of gradient values of the multiple reference pixels, a maximum gradient value of the multiple reference pixel, an average gradient value of the multiple reference pixels, a variance of pixel values of the multiple reference pixels, and a difference between a maximum pixel value and a minimum pixel value of the multiple reference pixels.

Still referring to FIG. 3, in step S320 a target filter matching the distance is select from the filter parameters corresponding to the specified prediction unit based on a distance between the prediction pixel and a first reference pixel of the prediction pixel.

In an embodiment of this application, prediction pixels in the same prediction unit may have the same or different first reference pixels. For example, the first reference pixel of the prediction pixel may be a reconstructed pixel adjacent to the specified prediction unit, or a pixel adjacent to the specified prediction unit and located on the upper left of the specified prediction unit, or a pixel selected from adjacent pixels of the prediction pixels based on an angular prediction mode used by the specified prediction unit. Alternatively, the first pixel at an upper left corner of the prediction unit is determined as the first reference pixel of the prediction pixels in the prediction unit. During encoding, the reconstructed pixel is an encoded pixel; and during decoding, the reconstructed pixel is a decoded pixel.

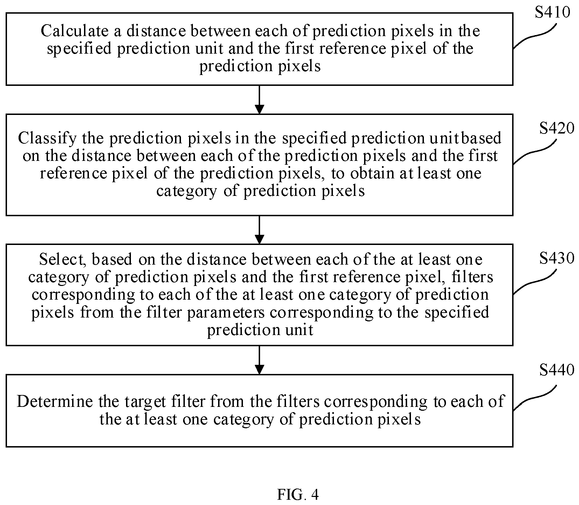

In an embodiment of this application, as shown in FIG. 4, a step S320 of selecting a target filter parameter matching the distance from the filter parameters corresponding to the specified prediction unit shown in FIG. 3 may include step S410 to step S440. A detailed description is as follows.

In step S410, a distance between each of prediction pixels in the specified prediction unit and the first reference pixel of the prediction pixels is calculated.

In an embodiment of this application, there may be multiple embodiments for calculating a distance between each of the prediction pixels and the first reference pixel, which are described respectively below.

In an embodiment of this application, an Euclidean distance between each of the prediction pixels and the first reference pixel of the prediction pixels may be calculated, and the Euclidean distance is determined as the distance between each of the prediction pixels and the first reference pixel of the prediction pixels. For example, in a pixel coordinate system, a coordinate of a prediction pixel is represented as $(x_0, y_0)$, and a coordinate of the first reference pixel of the prediction pixels is represented as $(x_1, y_1)$, a distance between the prediction pixel $(x_0, y_0)$ and the first reference pixel $(x_1, y_1)$ may be calculated according to a formula

$$\sqrt{\left(x_0 - x_1\right)^2 + \left(y_0 - y_1\right)^2}$$

In an embodiment of this application, an absolute value of an abscissa difference between each of the prediction pixels and the first reference pixel of the prediction pixels and an absolute value of an ordinate difference between each of the prediction pixels and the first reference pixel of the prediction pixels may be calculated, and a sum of the absolute value of the abscissa difference and the absolute value of the ordinate difference is determined as the distance between the prediction pixel and the first reference pixel of the prediction pixels. For example, in the pixel coordinate system, a coordinate of a prediction pixel is represented as $(x_0, y_0)$, and a coordinate of the first reference pixel of the prediction pixels is represented as $(x_1, y_1)$, a distance between the prediction pixel $(x_0, y_0)$ and the first reference pixel $(x_1, y_1)$ may be calculated according to a formula $|x_0 - x_1| + |y_0 - y_1|$.

In an embodiment of this application, an absolute value of an abscissa difference between each of the prediction pixels and the first reference pixel of the prediction pixels and an absolute value of an ordinate difference between each of the prediction pixel and the first reference pixel of the prediction pixels may be calculated, and a minimum value or a maximum value of the absolute value of the abscissa difference and the absolute values of the ordinate differences is determined as the distance between each of the prediction pixels and the first reference pixel of the prediction pixels. For example, in the pixel coordinate system, a coordinate of a prediction pixel is represented as $(x_0, y_{0)}$, and a coordinate of the first reference pixel of the prediction pixel is presented as $(x_1, y_1)$, a distance between the prediction pixel $(x_0, y_0)$ and the first reference pixel $(x_1, y_1)$ may be calculated according to a formula $\min(|x_0 - x_1|, |y_0 - y_1|)$ or $\max(|x_0 - x_1|, |y_0 - y_1|)$.

In an embodiment of this application, an absolute value of an abscissa difference between each of the prediction pixels and the first reference pixel of the prediction pixels may be calculated, and the absolute value of the abscissa difference is determined as the distance between each of the prediction pixels and the first reference pixel of the prediction pixels. For example, in the pixel coordinate system, a coordinate of a prediction pixel is presented as $(x_0, y_0)$, and a coordinate of a first reference pixel of the prediction pixel is presented as $(x_1, y_1)$, a distance between the prediction pixel $(x_0, y_0)$ and the first reference pixel $(x_1, y_1)$ may be calculated according to a formula $|x_0 - x_1|$. For example, when the first reference pixel is located on the front left of the prediction unit (for example, a prediction mode deviated toward a horizontal direction is adopted), the distance between the prediction pixel $(x_0, y_0)$ and the first reference pixel $(x_1, y_1)$ may be calculated according to the formula $|x_0 - x_1|$.

In an embodiment of this application, an absolute value of an ordinate difference between each of the prediction pixels and the first reference pixel of the prediction pixels may be calculated, and the absolute value of the ordinate difference is determined as the distance between each of the prediction pixels and the first reference pixel of the prediction pixels For example, in the pixel coordinate system, a coordinate of a prediction pixel is presented as $(x_0, y_0)$, and a coordinate of a first reference pixel of the prediction pixel is presented as $(x_1, y_1)$, a distance between the prediction pixel $(x_0, y_1)$ and the first reference pixel $(x_1, y_1)$ may be calculated according to a formula $|y_0 - y_1|$. For example, when the first reference pixel is located right above the prediction unit (for example, a prediction mode deviated toward a vertical direction is adopted), the distance between the prediction pixel $(x_0, y_0)$ and the first reference pixel $(x_1, y_1)$ may be calculated according to the formula $|y_0 - y_1|$.

Still referring to FIG. 4, in step S420, the prediction pixels in the specified prediction unit are classified based on the distance between each of the prediction pixels and the first reference pixel of the prediction pixels, to obtain at least one category of prediction pixels.

In an embodiment of this application, the prediction pixels in the specified prediction unit may be classified based on a set distance range and based on the distance between each of the prediction pixels and the first reference pixel of the prediction pixels.

In an embodiment of this application, the filter parameters corresponding to the specified prediction unit may include at least one distance threshold corresponding to the specified prediction unit. Therefore, at least one distance range may be obtained based on the at least one distance threshold, and the prediction pixels in the specified prediction unit may be classified based on the at least one distance range and based on the distance between each of the prediction pixels and the first reference pixel of the prediction pixels.

In step S430, filters corresponding to each of the at least one category of prediction pixels are selected from the filter parameters corresponding to the specified prediction unit based on the distance between each of the at least one category of prediction pixels and the first reference pixel.

In an embodiment of this application, filters corresponding to each of the at least one category of prediction pixels may be selected from the filter parameters corresponding to the specified prediction unit based on a positive correlation relationship between a distance and a smoothing degree of a filter. That is, if a distance between a prediction pixel and a first reference pixel is small, a filter with a low smoothing degree is selected; and if the distance between the prediction pixel and the first reference pixel is large, a filter with a high smoothing degree is selected.

In an embodiment of this application, the filters corresponding to each of the at least one category of prediction pixels may be selected from the filter parameters corresponding to the specified prediction unit based on a positive correlation relationship between a distance and the number of taps of a filter. That is, if a distance between a prediction pixel and a first reference pixel is small, a filter with a small number of taps is selected; and if the distance between the prediction pixel and the first reference pixel is large, a filter with a large number of taps is selected.

Still referring to FIG. 4, in step S440, the target filter is determined from the filters corresponding to each of the at least one category of prediction pixels.

In an embodiment of this application, a category to which a prediction pixel belongs needs to be determined, and filters corresponding to the category may be used as a target filter; or a part of filters corresponding to the category may be selected as the target filter.

Still referring to FIG. 3, in step S330, interpolation filtering is performed on a second reference pixel of the prediction pixel by using the target filter, to obtain a predicted value of the prediction pixel.

In an embodiment of this application, a second reference pixel of the prediction pixel and the first reference pixel of the prediction pixel may be the same pixel or may be different pixels.

In an embodiment of this application, after obtaining a predicted value of the prediction pixel, an encoder may encode the prediction pixel based on the predicted value of the prediction pixel. Alternatively, after obtaining a predicted value of the prediction pixel, a decoder may decode the prediction pixel based on the predicted value of the prediction pixel.

In the technical solution of the embodiment shown in FIG. 3, interpolation filters can be adaptively selected based on location information of prediction pixels, thereby improving the accuracy of pixel interpolation prediction during intra-frame prediction, thus improving the encoding compression performance and the decoding efficiency.

The technical solution of this embodiment of this application is applicable to the field of audio and video encoding technologies. Specifically, more than one group of sub-pixel interpolation filter coefficients may be predefined. For each pixel value in the prediction unit, a filter coefficient group is selected based on a location of a to-be-predicted pixel and a size of a prediction unit in which the to-be-predicted pixel is located, and finally interpolation filtering is performed on a reference pixel to obtain a predicted value of the prediction pixel. The implementation of the embodiments of this application is described below in detail.

In an embodiment of this application, K (K>1) interpolation filters $F_{all}$ ={$f_1$, $f_2$,..., $f_k$} may be predefined, which are different from each other in information. Specifically, the filters are different from each other in at least one of a smooth filter strength, the number of taps, a sub-pixel location precision, and a filter coefficient precision. For example, the filters may each have n taps, or the filters may include taps of different numbers from each other. In another example, the filters may each has a sub-pixel location precision of 32, or has a coefficient precision of 128.

In an embodiment of this application, each prediction unit may have a group of filter parameters {$F,TD$} , and the filter parameters may include a filter bank $F$={$f_1$, $f_2$,..., $f_{m+1}$} and a distance threshold $TD$={$td_1,td_2,...,td_m$}, m represents the number of distance thresholds. In order to determine filter parameters of the prediction units, the prediction units may be first classified, and a filter parameter group corresponding to each category of prediction units is determined, then the filter parameters of each of the prediction units may be obtained.

In an embodiment of this application, the prediction units may be classified in the following classification manners.

In a first classification manner, classification is performed based on a size of each of the prediction units.

In an embodiment of this application, size thresholds $TS$={$ts_1,ts_2,...,ts_n$} sorted in ascending order are set, prediction units are classified into multiple categories {$S_1,S_2,...,S_{n+1}$} based on the size of each of the prediction units including prediction pixels, a size of a prediction unit belonging to a category $S_x$ is greater than $ts_{x-1}$ and less than or equal to $ts_x$, that is, a small x indicates a small size of the prediction unit belonging to the $S_x$, and filter parameters {$F_x,TD_x$} are specified for each of categories of prediction units.

In an embodiment of this application, the size of the prediction unit may be represented as a product of a width and a height of prediction unit, or a sum of a width and a height of the prediction unit, or a width of the prediction unit, or a height of the prediction unit.

In an example, a size threshold $ts_1$=256, prediction units each with an area greater than or equal to 256 are classified into one category, and prediction units each with an area less than 256 are classified into another category, and filter parameters respectively corresponding to the above two categories are represented as {$F_1,TD_1$} and, filter parameters $F_x$ and $TD_x$ of different categories may include the same element or different elements, that is, $F_1$ may be the same as or may be different from $F_2$ and $TD_1$ may be the same as or may be different from $TD_2$.

In a second classification manner, classification is performed based on an intra-frame prediction mode used by each of the prediction units.

In an embodiment of this application, different filter parameters {$F_x,TD_x$} may be used for prediction units that adopt different intra-frame prediction modes.

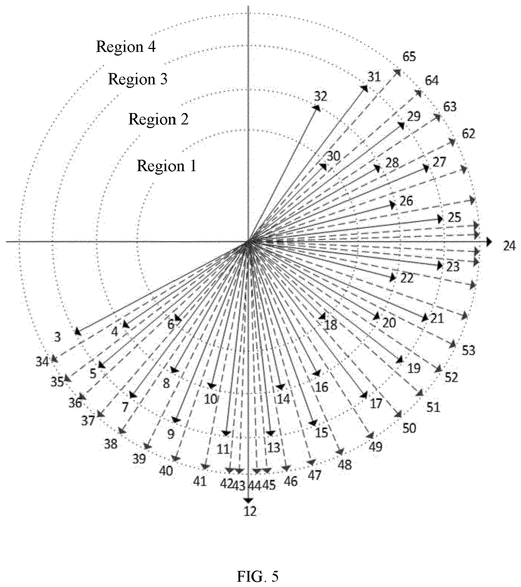

For example, prediction units that adopt vertically downward and adjacent prediction mode may be classified into one category, and prediction units that adopt horizontal-left and adjacent prediction modes are classified into another category. Specifically, for example, in intra-frame prediction mode shown in FIG. 5, prediction units that adopt intra-frame prediction mode numbers {18-32, 51-65} may be classified into one category, and other prediction units are classified into another category. Filter parameters corresponding to the above two categories are respectively presented as $\{F_1,TD_1\}$ and $\{F_2,TD_2\}$, filter parameters $F_x$ and $TD_x$ of different categories may include the same element or different elements, that is, $F_1$ may be the same as or may be different from $F_2$, and $TD_1$ may be the same as or may be different from $TD_2$.

In a third classification manner, classification is performed based on a statistical feature of reference pixels.

In an embodiment of this application, statistical analysis may be performed by using encoded (or decoded) reference pixels around each of the prediction units, and the prediction units are classified based on a statistical feature, different categories correspond to different filter parameters $\{F_x,TD_x\}$.

In an embodiment of this application, the encoded (or decoded) reference pixels around the prediction units may be reference pixels respectively on the top of the prediction units, or reference pixels respectively on the left of the prediction units, or may be reference pixels respectively on the top and left of the prediction units.

In an embodiment of this application, the statistical feature of the reference pixels may be a variance of gradient values of the reference pixels, a maximum gradient value of the reference pixels, or an average gradient value of the reference pixels. Alternatively, the statistical feature of the reference pixels may be a variance of pixel values of the reference pixels, or a difference between a maximum pixel value and a minimum pixel value of the reference pixels, or the like.

After classification is performed on prediction units, and filter parameters corresponding to each category of prediction units are determined, prediction pixels may be classified based on distances, so that different filters are selected for different prediction pixels, to perform interpolation filtering.

In an embodiment of this application, it is assumed that in a pixel coordinate system, a coordinate of a prediction pixel is presented as $(x_0,y_0)$, a coordinate of a reference pixel is represented as $(x_1,y_1)$, and a coordinate of the first pixel at an upper left corner of a prediction unit is presented as . Distance thresholds $TD$ in the filter parameters are sorted in ascending order as $\{td_1,td_2,...,td_m\}$, prediction pixels are classified into multiple categories $\{D_1,D_2,...,D_{m+1}\}$ based on the distance between each of the prediction pixels and the reference pixel, a distance between a prediction pixel belonging to a category $D_x$ and the reference pixel is greater than $td_{x-1}$ and less than or equal to $td_x$, that is, a small x indicates a close distance between the prediction pixel belonging to the $D_x$ and the reference pixel.

In an embodiment of this application, a filter with a low smooth degree may be used for a prediction pixel close to a reference pixel, and a filter with a high smooth degree may be used for a prediction pixel far away from a reference pixel.

In an embodiment of this application, a filter with a small number of taps may be used for a prediction pixel close to a reference pixel; and a filter with a large number of taps may be used for a prediction pixel far away from a reference pixel.

In a specific example, a filter parameter of a prediction unit is represented as $\{F = \{f_1, f_2, f_3\}, TD = \{td_1 = 1, td_2 = 2\}\}$, if each of reference pixels of all prediction pixels in the prediction unit are all on the top of the prediction unit, and distance between the prediction pixel and the reference pixel is calculated according to a formula $|y_0 - y_1|$, a first row of prediction pixels, a second row of prediction pixels, and another row of prediction pixels in the prediction unit may be respectively classified into categories $\{D_1,D_2,D_3\}$, and interpolation filtering is performed on a prediction pixel belonging to a category $D_x$ by using a corresponding filter $f_x$, to generate a predicted value.

In the technical solution of the embodiments of this application, sub-pixel interpolation filters may be adaptively selected based on sizes, prediction modes, or the like of prediction units and location information of to-be-predicted pixels, thereby improving the accuracy of pixel interpolation prediction during intra-frame prediction, thus improving the compression performance and the decoding efficiency.

The apparatus embodiments of this application are described in following, and the apparatus embodiments may be used for performing the interpolation filtering method for intra-frame prediction in the foregoing embodiments of this application. For details not disclosed in the apparatus embodiments of this application, reference is made to the embodiments of the interpolation filtering method for intra-frame prediction in this application.

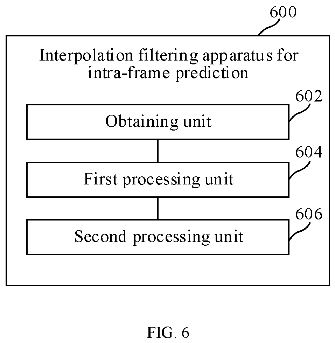

FIG. 6 is a block diagram of an interpolation filtering apparatus for intra-frame prediction according to an embodiment of this application.

Referring to FIG. 6, an interpolation filtering apparatus 600 for intra-frame prediction according to an embodiment of this application includes: an obtaining unit 602, a first processing unit 604, and a second processing unit 606.

The obtaining unit 602 is configured to obtain information of a prediction pixel in a specified prediction unit, and obtain filter parameters corresponding to the specified prediction unit. The first processing unit 604 is configured to select, based on a distance between the prediction pixel and a first reference pixel of the prediction pixel, a target filter matching the distance from the filter parameters corresponding to the specified prediction unit. The second processing unit 606 is configured to perform interpolation filtering on a second reference pixel of the prediction pixel by using the target filter, to obtain a predicted value of the prediction pixel.

In some embodiments of this application, based on the foregoing solutions, the interpolation filtering apparatus 600 further includes a classifying unit. The classifying unit is configured to classify, based on information of prediction units in a video frame, the prediction units in the video frame into at least one category, each of the at least one category of prediction units corresponds to a group of filter parameters. The obtaining unit 602 is further configured to determine the filter parameters corresponding to the specified prediction unit based on the group of filter parameters corresponding to a category to which the specified prediction unit belongs.

In some embodiments of this application, based on the foregoing solutions, the classifying unit is further configured to classify the prediction units in the video frame into the at least one category based on a size of each of the prediction units in the video frame; or classify the prediction units in the video frame into the at least one category based on an intra-frame prediction mode used by each of the prediction units in the video frame; or classify the prediction units in the video frame into the at least one category based on a feature of a reference pixel adjacent to each of the prediction units in the video frame.

In some embodiments of this application, based on the foregoing solutions, the classifying unit classifies the prediction units in the video frame into the at least one category based on the size of each of the prediction units in the video frame by: classifying the prediction units in the video frame into a category corresponding to at least one set size range based on the size of each of the prediction units in the video frame, the size of the prediction unit includes any one of the following: a product of a width and a height of the prediction unit, a sum of a width and a height of the prediction unit, a width of the prediction unit, and a height of the prediction unit.

In some embodiments of this application, based on the foregoing embodiments, the classifying unit classifies the prediction units in the video frame into the at least one category based on the feature of the reference pixel adjacent to each of the prediction units in the video frame by: calculating, based on multiple reference pixels respectively adjacent to the prediction units, a statistical feature of the multiple reference pixels; and classifying the prediction units in the video frame into the at least one category based on the statistical feature of the multiple reference pixels.

In some embodiments of this application, based on the foregoing embodiments, the multiple reference pixels include at least one of the following: reference pixels respectively located on the top of the prediction units in a pixel coordinate system; and reference pixels respectively located on the left of the prediction units in the pixel coordinate system.

In some embodiments of this application, based on the foregoing embodiments, the statistical feature of the multiple reference pixels includes any one of the following: a variance of gradient values of the multiple reference pixels, a maximum gradient value of the multiple reference pixel, an average gradient value of the multiple reference pixels, a variance of pixel values of the multiple reference pixels, and a difference between a maximum pixel value and a minimum pixel value of the multiple reference pixels.

In some embodiments of this application, based on the foregoing solutions, the first processing unit 604 includes: a calculating unit, a classifying unit, a selecting unit, and a determining unit. The classifying unit is configured to calculate a distance between each of prediction pixels in the specified prediction unit and a first reference pixel of the prediction pixels. The classifying unit is configured to classify the prediction pixels in the specified prediction unit based on the distance between each of the prediction pixels and the first reference pixel of the prediction pixels, to obtain at least one category of prediction pixels. The selecting unit is configured to select, based on the distance between each of the at least one category of prediction pixels and the first reference pixel, filters corresponding to each of the at least one category of prediction pixels from the filter parameters corresponding to the specified prediction unit. The determining unit is configured to determine the target filter from the filters corresponding to each of the at least one category of prediction pixels.

In some embodiments of this application, based on the foregoing solutions, the filter parameters corresponding to the specified prediction unit includes at least one distance threshold corresponding to the specified prediction unit. The classifying unit is further configured to classify the prediction pixels in the specified prediction unit based on the distance between each of the prediction pixels and the first reference pixel of the prediction pixels and the at least one distance threshold.

In some embodiments of this application, based on the foregoing solutions, the calculating unit is further configured to calculate the distance between each of the prediction pixels in the specified prediction unit and the first reference pixel of the prediction pixels in any manner of the following:

calculating an Euclidean distance between each of the prediction pixels and the first reference pixel of the prediction pixels, and determining the Euclidean distance as the distance between the prediction pixel and the first reference pixel of the prediction pixels;

calculating an absolute value of an abscissa difference between each of the prediction pixels and the first reference pixel of the prediction pixels and an absolute value of an ordinate difference between each of the prediction pixels and the first reference pixel of the prediction pixels, and determining a sum of the absolute value of the abscissa difference and the absolute value of the ordinate difference as the distance between each of the prediction pixels and the first reference pixel of the prediction pixels;

calculating the absolute value of the abscissa difference of each of the prediction pixels and the first reference pixel of the prediction pixels and the absolute value of the ordinate difference of each of the prediction pixels and the first reference pixel of the prediction pixels, and determining a minimum value or a maximum value between the absolute value of the abscissa difference and the absolute value of the ordinate difference as the distance between each of the prediction pixels and the first reference pixel of the prediction pixels;

calculating the absolute value of the abscissa difference of each of the prediction pixels and the first reference pixel of the prediction pixels, and determining the absolute value of the abscissa difference as the distance between each of the prediction pixels and the first reference pixel of the prediction pixels; and

calculating the absolute value of the ordinate difference of each of the prediction pixels and the first reference pixel of the prediction pixels, and determining the absolute value of the ordinate difference as the distance between each of the prediction pixels and the first reference pixel of the prediction pixels.

In some embodiments of this application, based on the foregoing solutions, the first reference pixel of the prediction pixels includes any one of the following: a reconstructed pixel adjacent to the specified prediction unit, a pixel adjacent to the specified prediction unit and located on the upper left of the specified prediction unit, and a pixel selected from adjacent pixels of the prediction pixels based on an angular prediction mode used by the specified prediction unit. Alternatively, the first pixel at an upper left corner of the specified prediction unit is used as the first reference pixel.

In some embodiments of this application, based on the foregoing solutions, the selecting unit is further configured to select the filters corresponding to each of the at least one category of prediction pixels from the filter parameters corresponding to the specified prediction unit in at least one manner of the following: selecting, based on a positive correlation relationship between a distance and a smoothing degree of a filter, the filters corresponding to each of the at least one category of prediction pixels from the filter parameters corresponding to the specified prediction unit; and selecting, based on a positive correlation relationship between a distance and the number of taps of a filter, the filters corresponding to each of the at least one category of prediction pixels from the filter parameters corresponding to the specified prediction unit.

In some embodiments of this application, based on the foregoing solutions, filters are different from each other in at least one of the following parameters: a smoothing strength, the number of taps, a sub-pixel location precision, and a filtering coefficient precision.

In some embodiments of this application, based on the foregoing solutions, after the predicted value of the prediction pixel is obtained, the second processing unit 606 is further configured to encode the prediction pixel based on the predicted value of the prediction pixel; or decode the prediction pixel based on the predicted value of the prediction pixel.

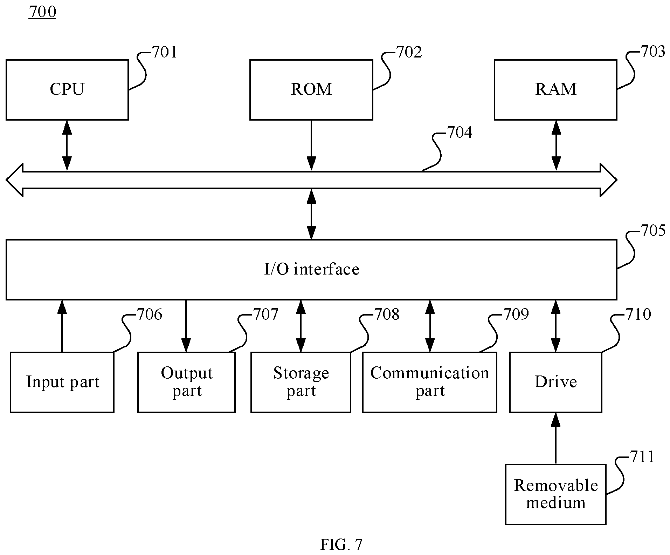

FIG. 7 is a schematic structural diagram of a computer system for implementing an electronic device according to an embodiment of this application.

It is to be noted that the computer system 700 of the electronic device shown in FIG. 7 is merely an example, and does not constitute any limitation on functions and use ranges of the embodiments of this application.

As shown in FIG. 7, the computer system 700 includes a central processing unit (CPU) 701, which may perform categories of suitable actions and processing based on a program stored in a read-only memory (ROM) 702 or a program loaded from a storage part 708 into a random-access memory (RAM) 703, for example, perform the method described in the foregoing embodiments. The RAM 703 further stores various programs and data required for system operations. The CPU 701, the ROM 702, and the RAM 703 are connected to each other through a bus 704. An input/output (I/O) interface 705 is also connected to the bus 704.

The following components are connected to the I/O interface 705: an input part 706 including a such as a keyboard, a mouse, or the like, an output part 707 including a cathode ray tube (CRT), a liquid crystal display (LCD), a speaker, or the like, a storage part 708 including a such as a hard disk, or the like, a communication part 709 including a network interface card such as a local area network (LAN) card or a modem. The communication part 709 performs communication processing over a network such as the Internet. A drive 710 is also connected to the I/O interface 705 as required. A removable medium 711, such as a disk, an optical disc, a magneto-optical disc, or a semiconductor memory, is installed on the drive 710 as required, so that a computer program read from the removable medium is installed in the storage part 708 as required.

According to an embodiment of this application, the processes described in the following by referring to the flowcharts may be implemented as computer software programs. For example, an embodiment of this application includes a computer program product. The computer program product includes a computer program stored in a computer-readable medium. The computer program includes a computer program used for performing a method shown in the flowchart. In such an embodiment, the computer program may be downloaded and installed from the network through the communication part 709, and/or installed from the removable medium 711. When the computer program is executed by the CPU 701, the various functions defined in the system of this application are executed.

It is to be noted that the computer-readable medium shown in the embodiments of this application may be a computer-readable signal medium or a computer-readable storage medium or any combination thereof. The computer-readable storage medium may be, for example, but is not limited to, an electric, magnetic, optical, electromagnetic, infrared, or semi-conductive system, apparatus, or component, or any combination thereof. A more specific example of the computer-readable storage medium may include but is not limited to: an electrical connection having one or more wires, a portable computer magnetic disk, a hard disk, a random access memory (RAM), a read-only memory (ROM), an erasable programmable read-only memory (EPROM), a flash memory, an optical fiber, a compact disc read-only memory (CD-ROM), an optical storage device, a magnetic storage device, or any appropriate combination thereof. In the embodiments of this application, the computer-readable storage medium may be any tangible medium including or storing a program, and the program may be used by or in combination with an instruction execution system, apparatus or component. In this embodiment of this application, the computer-readable signal medium may include a data signal transmitted in a baseband or as part of a carrier, and stores a computer-readable computer program. The propagated data signal may be in multiple forms, including but not limited to, an electromagnetic signal, an optical signal, or any appropriate combination thereof. The computer-readable signal medium may be further any computer readable medium in addition to a computer-readable storage medium. The computer readable medium may send, propagate, or transmit a program that is used by or used in combination with an instruction execution system, apparatus, or device. The computer program stored in the computer-readable medium may be transmitted by using any suitable medium, including but not limited to: a wireless medium, a wire, or the like, or any suitable combination thereof.

The flowcharts and block diagrams in the drawings illustrate possible system architectures, functions, and operations that may be implemented by a system, a method, and a computer program product according to various embodiments of this application. In this regard, each box in a flowchart or a block diagram may represent a module, a program segment, or a part of code. The module, the program segment, or the part of code includes one or more executable instructions used for implementing designated logic functions. In some implementations used as substitutes, functions annotated in boxes may alternatively occur in a sequence different from that annotated in a drawing. For example, actually two boxes shown in succession may be performed basically in parallel, and sometimes the two boxes may be performed in a reverse sequence. This is determined by a related function. Each box in a block diagram or a flowchart and a combination of boxes in the block diagram or the flowchart may be implemented by using a dedicated hardware-based system configured to perform a designated function or operation, or may be implemented by using a combination of dedicated hardware and a computer instruction.

A related unit described in the embodiments of this application may be implemented in a software manner, or may be implemented in a hardware manner, and the unit described can also be set in a processor. Names of the units do not constitute a limitation on the units in a specific case.

According to another aspect, this application further provides a computer-readable medium. The computer-readable medium may be included in the electronic device described in the foregoing embodiments, or may exist alone and is not disposed in the electronic device. The computer-readable medium carries one or more programs, the one or more programs, when executed by the electronic device, causing the electronic device to implement the method described in the foregoing embodiments.

It is to be noted that although several modules or units of a device for action execution are mentioned in the foregoing detailed description, the division is not mandatory. Actually, according to the embodiments of this application, the features and functions of two or more modules or units described above may be specified in one module or unit. Conversely, features and functions of one module or unit described above may be further divided into multiple modules or units to be specified.

According to the foregoing description of the embodiments, a person skilled in the art may readily understand that the exemplary embodiments described herein may be implemented by using software, or may be implemented by combining software and necessary hardware. Therefore, the technical solutions of the embodiments of this application may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the methods according to the embodiments of this application.

After considering the specification and practicing the disclosed embodiments, a person skilled in the art may easily conceive of other embodiments of this application. This application is intended to cover any variations, uses, or adaptive changes of this application. These variations, uses, or adaptive changes follow the general principles of this application and include common general knowledge or common technical means in the art, which are not disclosed in this application.

It is to be understood that this application is not limited to the structures described above and shown in the drawings, and various modifications and changes can be made without departing from the scope of this application. The scope of this application is limited only to the claims.

## Claims

1. An interpolation filtering method for intra-frame prediction, wherein the method is performed by a video decoding apparatus and/or a video encoding apparatus and comprises:

   obtaining information of a prediction pixel in a specified prediction unit, and obtaining filter parameters corresponding to the specified prediction unit;
   selecting, based on a distance between the prediction pixel and a first reference pixel of the prediction pixel, a target filter matching the distance from the filter parameters corresponding to the specified prediction unit; and
   performing interpolation filtering on a second reference pixel of the prediction pixel by using the target filter, to obtain a predicted value of the prediction pixel.

2. The interpolation filtering method according to claim 1, wherein before the obtaining filter parameters corresponding to the specified prediction unit, the interpolation filtering method further comprises:

   classifying, based on information of prediction units in a video frame, the prediction units in the video frame into at least one category, each of the at least one category of prediction units being corresponding to a group of filter parameters, and wherein
   the obtaining filter parameters corresponding to the specified prediction unit comprises:
   determining the filter parameters corresponding to the specified prediction unit based on the group of filter parameters corresponding to one of the at least one category to which the specified prediction unit belongs.

3. The interpolation filtering method according to claim 2, wherein the classifying, based on information of prediction units in a video frame, the prediction units in the video frame into at least one category comprises:

   classifying the prediction units in the video frame into the at least one category based on a size of each of the prediction units in the video frame; or
   classifying the prediction units in the video frame into the at least one category based on an intra-frame prediction mode used by each of the prediction units in the video frame; or
   classifying the prediction units in the video frame into the at least one category based on a feature of a reference pixel adjacent to each of the prediction units in the video frame.

4. The interpolation filtering method according to claim 3, wherein the classifying the prediction units in the video frame into the at least one category based on a size of each of the prediction units in the video frame comprises:
   classifying the prediction units in the video frame into a category corresponding to at least one set size range based on the size of each of the prediction units in the video frame, the size of each of the prediction units comprising any one of the following: a product of a width and a height of the prediction unit, a sum of a width and a height of the prediction unit, a width of the prediction unit, and a height of the prediction unit.

5. The interpolation filtering method according to claim 3, wherein the classifying the prediction units in the video frame into the at least one category based on a feature of a reference pixel adjacent to each of the prediction units in the video frame comprises:

   calculating, based on a plurality of reference pixels respectively adjacent to the prediction units, a statistical feature of the plurality of reference pixels; and
   classifying the prediction units in the video frame into the at least one category based on the statistical feature of the plurality of reference pixels.

6. The interpolation filtering method according to claim 5, wherein the plurality of reference pixels comprises at least one of the following: reference pixels respectively located on the top of the prediction units in a pixel coordinate system, and reference pixels respectively located on the left of the prediction units in the pixel coordinate system, and
   the statistical feature of the plurality of reference pixels comprises any one of the following: a variance of gradient values of the plurality of reference pixels, a maximum gradient value of the plurality of reference pixels, an average gradient value of the plurality of reference pixels, a variance of pixel values of the plurality of reference pixels, and a difference between a maximum pixel value and a minimum pixel value of the plurality of reference pixels.

7. The interpolation filtering method according to claim 1, wherein the selecting, based on a distance between the prediction pixel and a first reference pixel of the prediction pixel, a target filter matching the distance from the filter parameters corresponding to the specified prediction unit comprises:

   calculating a distance between each of prediction pixels in the specified prediction unit and a first reference pixel of the prediction pixels;
   classifying the prediction pixels in the specified prediction unit based on the distance between each of the prediction pixels and the first reference pixel of the prediction pixels, to obtain at least one category of prediction pixels; selecting, based on the distance between each of the at least one category of prediction pixels and the first reference pixel, filters corresponding to each of the at least one category of prediction pixels from the filter parameters corresponding to the specified prediction unit; and determining the target filter from the filters corresponding to each of the at least one category of prediction pixels.

8. The interpolation filtering method according to claim 7, wherein the filter parameters corresponding to the specified prediction unit comprises at least one distance threshold corresponding to the specified prediction unit, and
the classifying the prediction pixels in the specified prediction unit based on the distance between each of the prediction pixels and the first reference pixel of the prediction pixels comprises:
classifying the prediction pixels in the specified prediction unit based on the at least one distance threshold and the distance between each of the prediction pixels and the first reference pixel of the prediction pixels.

9. The interpolation filtering method according to claim 7, wherein the calculating a distance between each of prediction pixels in the specified prediction unit and the first reference pixel of the prediction pixels comprises any one of the following:

calculating an Euclidean distance between each of the prediction pixels and the first reference pixel of the prediction pixels, and determining the Euclidean distance as the distance between the prediction pixel and the first reference pixel of the prediction pixels;
calculating an absolute value of an abscissa difference between each of the prediction pixels and the first reference pixel of the prediction pixels and an absolute value of an ordinate difference between each of the prediction pixels and the first reference pixel of the prediction pixels, and determining a sum of the absolute value of the abscissa difference and the absolute value of the ordinate difference as the distance between each of the prediction pixels and the first reference pixel of the prediction pixels;
calculating the absolute value of the abscissa difference of each of the prediction pixels and the first reference pixel of the prediction pixels and the absolute value of the ordinate difference of each of the prediction pixels and the first reference pixel of the prediction pixels, and determining a minimum value or a maximum value between the absolute value of the abscissa difference and the absolute value of the ordinate difference as the distance between each of the prediction pixels and the first reference pixel of the prediction pixels;
calculating the absolute value of the abscissa difference of each of the prediction pixels and the first reference pixel of the prediction pixels, and determining the absolute value of the abscissa difference as the distance between each of the prediction pixels and the first reference pixel of the prediction pixels; and
calculating the absolute value of the ordinate difference of each of the prediction pixels and the first reference pixel of the prediction pixels, and determining the absolute value of the ordinate difference as the distance between each of the prediction pixels and the first reference pixel of the prediction pixels.

10. The interpolation filtering method according to claim 7, wherein

the first reference pixel of the prediction pixels comprises any one of the following: a reconstructed pixel adjacent to the specified prediction unit, a pixel adjacent to the specified prediction unit and located on the upper left of the specified prediction unit, and a pixel selected from adjacent pixels of the prediction pixels based on an angular prediction mode used by the specified prediction unit; or
a first pixel at an upper left corner of the specified prediction unit is determined as the first reference pixel.

11. The interpolation filtering method according to claim 7, wherein the selecting, based on the distance between each of the at least one category of prediction pixels and the first reference pixel, filters corresponding to each of the at least one category of prediction pixels from the filter parameters corresponding to the specified prediction unit comprises at least one of the following:

selecting, based on a positive correlation relationship between a distance and a smoothing degree of a filter, the filters corresponding to each of the at least one category of prediction pixels from the filter parameters corresponding to the specified prediction unit; and
selecting, based on a positive correlation relationship between a distance and the number of taps of a filter, the filters corresponding to each of the at least one category of prediction pixels from the filter parameters corresponding to the specified prediction unit.

12. The interpolation filtering method according to any one of claims 1 to 11, wherein filters are different from each other in at least one of the following parameters: a smoothing strength, the number of taps, a sub-pixel location precision, and a filtering coefficient precision.

13. The interpolation filtering method according to any one of claims 1 to 11, after the obtaining a predicted value of the prediction pixel, the method further comprising:

    encoding the prediction pixel based on the predicted value of the prediction pixel; or
    decoding the prediction pixel based on the predicted value of the prediction pixel.

14. An interpolation filtering apparatus for intra-frame prediction, comprising:

    an obtaining unit, configured to obtain information of a prediction pixel in a specified prediction unit, and obtain filter parameters corresponding to the specified prediction unit;
    a selecting unit, configured to select, based on a distance between the prediction pixel and a first reference pixel of the prediction pixel, a target filter matching the distance from the filter parameters corresponding to the specified prediction unit; and
    a processing unit, configured to perform interpolation filtering on a second reference pixel by using the target filter, to obtain a predicted value of the prediction pixel.

15. A computer-readable medium, storing a computer program, wherein the computer program, when being executed by a processor, implements the interpolation filtering method for intra-frame prediction according to any one of claims 1 to 13.

16. An electronic device, comprising:

    one or more processors; and
    a storage apparatus, configured to store one or more programs, wherein the one or more programs, when being executed by the one or more processors, causes the electronic device to implement the interpolation filtering method for intra-frame prediction according to any one of claims 1 to 13.

100

140

130

Network 150

110

120

FIG. 1

FIG. 2

Obtain information of a prediction pixel in a specified prediction unit, and obtain filter parameters corresponding to the specified prediction unit

S310

Select, based on a distance between the prediction pixel and a first reference pixel of the prediction pixel, a target filter matching the distance from the filter parameters corresponding to the specified prediction unit

S320

Perform interpolation filtering on a second reference pixel of the prediction pixel by using the target filter, to obtain a predicted value of the prediction pixel

S330

FIG. 3

Calculate a distance between each of prediction pixels in the specified prediction unit and the first reference pixel of the prediction pixels — S410

Classify the prediction pixels in the specified prediction unit based on the distance between each of the prediction pixels and the first reference pixel of the prediction pixels, to obtain at least one category of prediction pixels — S420

Select, based on the distance between each of the at least one category of prediction pixels and the first reference pixel, filters corresponding to each of the at least one category of prediction pixels from the filter parameters corresponding to the specified prediction unit — S430

Determine the target filter from the filters corresponding to each of the at least one category of prediction pixels — S440

FIG. 4

FIG. 5

600

Interpolation filtering apparatus for
intra-frame prediction

602

Obtaining unit

604

First processing unit

606

Second processing unit

FIG. 6

700

| 701 | 702 | 703 |
|---|---|---|
| CPU | ROM | RAM |

704

I/O interface 705

| 706 | 707 | 708 | 709 | 710 |
|---|---|---|---|---|
| Input part | Output part | Storage part | Communication part | Drive |

Removable medium 711

FIG. 7

## INTERNATIONAL SEARCH REPORT

| International application No. |
| --- |
| **PCT/CN2020/122791** |

| A. | CLASSIFICATION OF SUBJECT MATTER |
| --- | --- |
| | H04N 19/82(2014.01)i; H04N 19/593(2014.01)i |

According to International Patent Classification (IPC) or to both national classification and IPC

| B. | FIELDS SEARCHED |
| --- | --- |

Minimum documentation searched (classification system followed by classification symbols)

    H04N

Documentation searched other than minimum documentation to the extent that such documents are included in the fields searched

Electronic data base consulted during the international search (name of data base and, where practicable, search terms used)

    CNABS, CNTXT, CNKI, DWPI, SIPOABS, EPTXT, USTXT, JPTXT: 预测, 插值, 滤波, 帧内, 像素, 尺寸, 大小, 样本, 参考, 距离, 类别, 分类, predict, interpolation, filter, intra, pixel, size, sample, reference, distance, category

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 110944211 A (TENCENT TECHNOLOGY SHENZHEN CO., LTD.) 31 March 2020 (2020-03-31)<br>    entire document | 1-16 |
| X | WO 2019088700 A1 (SAMSUNG ELECTRONICS CO., LTD.) 09 May 2019 (2019-05-09)<br>    description paragraphs 62-137, 285-316, 330, figures 1-2, 17-18 | 1-16 |
| A | CN 108028923 A (LG ELECTRONICS INC.) 11 May 2018 (2018-05-11)<br>    entire document | 1-16 |
| A | CN 108702502 A (SAMSUNG ELECTRONICS CO., LTD.) 23 October 2018 (2018-10-23)<br>    entire document | 1-16 |
| A | CN 110166773 A (ZHEJIANG DAHUA TECHNOLOGY CO., LTD.) 23 August 2019 (2019-08-23)<br>    entire document | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 January 2021** | **25 January 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/122791**

| Patent document cited in search report | | | Publication date (day/month/year) | Patent family member(s) | | | Publication date (day/month/year) |
|---|---|---|---|---|---|---|---|
| CN | 110944211 | A | 31 March 2020 | None | | | |
| WO | 2019088700 | A1 | 09 May 2019 | KR | 20200066638 | A | 10 June 2020 |
| | | | | CN | 111543054 | A | 14 August 2020 |
| CN | 108028923 | A | 11 May 2018 | EP | 3349448 | A4 | 26 June 2019 |
| | | | | JP | 6599552 | B2 | 30 October 2019 |
| | | | | KR | 102160667 | B1 | 28 September 2020 |
| | | | | US | 10574984 | B2 | 25 February 2020 |
| | | | | EP | 3349448 | A1 | 18 July 2018 |
| | | | | JP | 2018530959 | A | 18 October 2018 |
| | | | | WO | 2017043786 | A1 | 16 March 2017 |
| | | | | US | 2019052875 | A1 | 14 February 2019 |
| | | | | KR | 20180034665 | A | 04 April 2018 |
| | | | | EP | 3349448 | B1 | 11 November 2020 |
| | | | | IN | 201837008464 | A | 18 May 2018 |
| CN | 108702502 | A | 23 October 2018 | EP | 3393126 | A4 | 17 April 2019 |
| | | | | JP | 2019508944 | A | 28 March 2019 |
| | | | | EP | 3393126 | A1 | 24 October 2018 |
| | | | | RU | 2018132742 | A | 17 March 2020 |
| | | | | KR | 20180107087 | A | 01 October 2018 |
| | | | | WO | 2017142327 | A1 | 24 August 2017 |
| CN | 110166773 | A | 23 August 2019 | None | | | |

Form PCT/ISA/210 (patent family annex) (January 2015)

**EP 3 985 983 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911122284